# EUROPEAN PATENT SPECIFICATION

(11) **EP 2 573 920 B1**
(45) Date of publication and mention of the grant of the patent: **16.01.2019**
(21) Application number: 11182088.2
(22) Date of filing: 21.09.2011
(51) Int. Cl.: H02M 3/335

(54) **A circuit for providing an operating voltage**
Schaltung zur Bereitstellung einer Betriebsspannung
Circuit de fourniture d'une tension de fonctionnement

(43) Date of publication of application: 27.03.2013
(73) Proprietor: Helvar Oy Ab, 02150 Espoo (FI)
(72) Inventor: Naakka, Harri, FI-03600 KARKKILA (FI)
(74) Representative: Berggren Oy, Helsinki & Oulu

(56) References cited:
- US-A1- 2007 115 696
- US-A1- 2008 049 455

## Description

### FIELD OF THE INVENTION

The invention relates to a circuit for providing an operating voltage. In particular, the invention relates to a circuit for providing, generating and/or controlling an operating voltage for control means arranged to control an isolated switched mode power supply. As an example, a circuit in accordance with the invention may be employed to supply an operating voltage to control means arranged to control a switch of an isolated switched mode power supply, such as a flyback converter circuit or a forward converter circuit, which in turn may be arranged to provide an output voltage to supply power to a load such as a light emitting diode (LED), a string of LEDs, a recharger apparatus, etc.

### BACKGROUND OF THE INVENTION

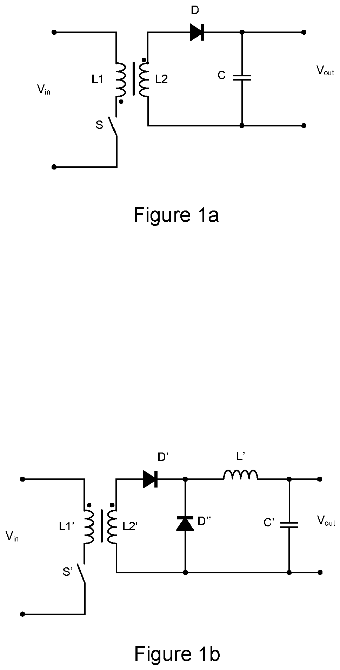

As an example of an isolated switched mode power supply, a flyback converter may be used to convert an alternating current (AC) or a direct current (DC) input to a DC output. A basic structure of a flyback converter is provided in Figure 1a. As a brief summary of the operation, when the switch S is closed, the primary winding L1 of a transformer arrangement is directly connected to the voltage source Vᵢₙ, resulting in electric current flowing through the switch S and through the primary winding L1. This, in turn, results in an increase of the magnetic flux in the transformer arrangement, inducing a voltage in the secondary winding L2 of the transformer arrangement. The resulting voltage across the secondary winding L2 is negative, keeping the diode D reverse-biased and hence blocked. In this state the electrical energy stored in the capacitor C is supplied to the output of power supply, thereby providing an output voltage Vₒᵤₜ. Conversely, when the switch S is opened, the energy stored in the transformer arrangement is transferred to the output of the power supply.

Another example of an isolated switched mode power supply is a forward converter, which may be used to convert a DC input to a DC output. Figure 1b illustrates a basic structure of a forward converter. As a brief summary of the operation, when the switch S' is closed, the voltage Vᵢₙ at the input of the forward converter causes electric current to flow through the primary winding L1', which in turn causes electric current to flow also through the secondary winding L2'. Consequently, the current flows also via the diode D1' and via the inductor L' hence providing electrical energy to the output of the power supply, resulting in the output voltage Vₒᵤₜ. Conversely, when the switch S' is opened, the energy stored in the capacitor C' is provided to the output of the power supply.

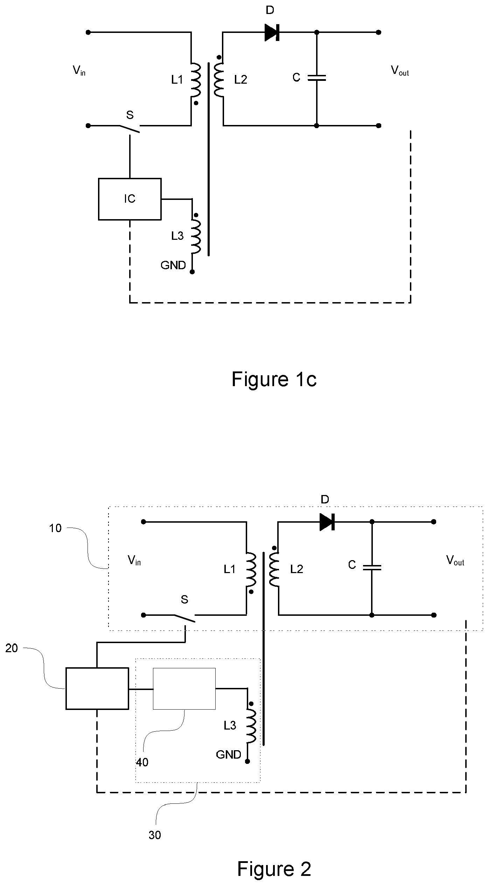

The control of the switch S or S' may be arranged for example as illustrated in Figure 1c, where a flyback converter is used as an example of an isolated switched mode power supply. An integrated circuit IC is arranged to control the switch S or S' in response to feedback received from the secondary side of the power supply. Moreover, an auxiliary winding L3 is arranged on the primary side of the transformer arrangement such that the voltage induced in the auxiliary winding L3 is used to supply the operating voltage to the integrated circuit IC acting as the control means arranged to control the operation of the switch S.

A challenge in such an arrangement employing an isolated switched mode power supply is that if the output voltage of the power supply may vary, also the voltage induced in the auxiliary winding L3 varies depending on the load applied at the output of the power supply. In particular, a small load in the output of the power supply results in a low voltage being induced to the auxiliary winding L3, whereas a high load in the output of the power supply results in a high voltage being induced in the auxiliary winding L3. Consequently, the operating voltage supplied to the integrated circuit IC from the auxiliary winding L3 may be too low to enable the operation of the integrated circuit or too high thus risking the damage of the integrated circuit or other components coupled to the circuit or in less severe case, power losses in the components.

Further in related art, US 2007/0115696 A1 discloses a circuit for current and voltage control in a switching power supply controlled on the primary side, comprising a transformer with a primary-sided and a secondary-sided main winding, wherein energy pulses are transmitted from the primary side to the secondary side. Furthermore, a primary-sided switch switches on an off a primary current through the primary-sided main winding. A primary current comparator determines a switch-off time of the switch depending on the primary current. In order to reduce the load dependency of the output voltage, the control variable is variably amplified by a feedback network and additionally the control variable is reduced depending on the output load through a correction network.

US 2008/049455 A1 discloses a commutation switch turning-on control switching element, which is controlled with a voltage generated at a fourth coil (auxiliary coil) of a main transformer and controls application of a control voltage to a control terminal of a commutation switching element. A commutation switch turning-off control switching element is disclosed, which is connected to the control terminal of the commutation switching element and, when the commutation switch turning-off control switching element is turned on, controls a voltage at the control terminal of the commutation switching element to turn off the commutation switching element. A control switching element drive circuit turns on the commutation switch turning-off control switching element at a time when a primary switching element is turned on.

The object of the present invention is to provide a circuit for supplying a proper operating voltage to the corresponding control means, such as the integrated circuit illustrated in Figure 1b, taking into account different loads that may be applied at the output of a power supply the control means is arranged to control.

### SUMMARY OF THE INVENTION

The objects of the invention are reached by a circuit as defined by the independent claim.

According to a first aspect of the invention a circuit for supplying an operating voltage to control means arranged to drive an isolated switched mode power supply is provided. The circuit comprises an auxiliary winding arranged on the primary side of the isolated switched mode power supply, and arranged in a first branch connecting a first node to a second node. The circuit further comprises a capacitor arranged in series with the auxiliary winding in the first branch coupling the first node to the second node, the capacitor having a first terminal coupled to a second terminal of the auxiliary winding and a second terminal coupled to the second node. The circuit also comprises a first diode arranged in a second branch connecting the first node to the second node, the first diode having an anode coupled to the first node and a cathode coupled to the second node, and second diode having an anode coupled to the second node and a cathode coupled to an output node, the output node being connectable to the control means for providing the operating voltage. The circuit further comprises an inductor in the second branch connecting the first node to the second node, the inductor arranged in series with the diode.
An advantage of a circuit according to the present invention is that it serves to reduce the dependency of the operating voltage supplied by the circuit on the load applied at the output of a power supply, hence enabling a wider range of different and/or variable loads to be applied at the output of the power supply without interfering with the operation of the components making use of the operating voltage supplied by the circuit.
The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

Figure 1a illustrates a basic structure of a flyback converter as an example of an isolated switched mode power supply.
Figure 1b illustrates a basic structure of a forward converter as an example of an isolated switched mode power supply.
Figure 1c illustrates the control of a switch of an isolated switched mode power supply.
Figure 2 illustrates an example of an arrangement making use of a circuit according to an embodiment of the invention.
Figure 3 illustrates an example of a circuit for supplying operating voltage.
Figure 4 illustrates an example of a circuit for supplying operating voltage according to an embodiment of the invention.
Figure 5 illustrates an example of a circuit for supplying operating voltage according to an embodiment of the invention.
Figure 6 illustrates an example of a circuit for supplying operating voltage according to an embodiment of the invention.

### DETAILED DESCRIPTION

Figure 2 illustrates an example of an arrangement making use of a circuit 30 according to an embodiment of the invention. The circuit 30 is arranged to provide an operating voltage to control means 20 arranged to control the operation of an isolated switched mode power supply 10. The power supply 10 comprises a transformer arrangement comprising the primary winding L1 and the secondary winding L2. In this example, the control means 20 is arranged to control the switch S in response to feedback received from the secondary side of the power supply 10. The feedback from the secondary side of the power supply 10 may be provided for example by using an optocoupler. The circuit 30 comprises an auxiliary winding L3 arranged on the primary side of the transformer arrangement and a voltage control circuit 40. The circuit 30 is arranged to supply operating voltage to an output node connectable to the control means 20. A terminal of the auxiliary winding L3 is coupled to the voltage control circuit 40, and the voltage control circuit 40 is connectable to the control means 20 via the output node of the circuit 30.

The circuit 30 within the arrangement of Figure 2 provides operating voltage on the basis of a voltage induced in the auxiliary winding L3, which is proportional to the load applied at the output of the power supply. A small load in the output of the power supply 10 results in a low voltage being induced in the auxiliary winding L3, whereas a high load in the output of the power supply 10 results in a high voltage being induced in the auxiliary winding L3. In other words, the voltage induced in the auxiliary winding L3 is directly proportional to the load at the output of the power supply 10. Consequently, if the load in the output of the power supply 10 changes also the induced voltage in the auxiliary winding L3 changes, and the circuit 30 is arranged to control the operating voltage supplied at its output accordingly.

In the example of Figure 2 the power supply is represented by a flyback converter 10 where the control means 20 is arranged to control a single switch of the flyback converter 10. However, the circuit 30 may be also applied in context of other types of isolated switched mode power supplies or power converters, in particular single-switch isolated switched mode power supplies. Moreover, the control means 20 coupled thereto may be arranged to drive the operation of a component different from a switch.

The control means 20 may be for example an integrated circuit or a similar kind of apparatus that is able to make use of the operating voltage supplied by the circuit 30 and provide control signal(s) for operating the switch S (or another component of a power supply). Examples of such a similar kind of apparatus include a microprocessor, a microcontroller, etc. Furthermore, as an alternative, instead of using a dedicated and/or separate control means 20, the operating voltage supplied by the circuit 30 may be directly connected or coupled for example to a switch of a power supply to provide a voltage/current/charge required to control the switch, as discussed in more detail in the following.

Note also that the example arrangement of Figure 2 is a simplified schematic representation, possibly omitting a number of components employed in a real-life arrangement that is making use of a circuit 30 according to an embodiment of the invention.

The switch S may be any suitable type of an electrically controllable switch. An electrically controllable switch typically has a first terminal, a second terminal and a control terminal. Such a switch is said to be open (i.e. in open state) when there is no electrical contact between the first terminal of the switch and the second terminal of the switch and, consequently, the flow of electric current between the first and second terminals is not enabled. Conversely, the switch is said to be closed (i.e. in closed state) when there is an electrical contact between the first terminal and the second terminal of the switch, enabling the flow of electric current between the first terminal and the second terminal. The control terminal of the switch is arranged to enable toggling between the open state and the closed state. As an example, electrical charge exceeding a predetermined threshold applied to the control terminal of the switch may be arranged to cause the switch to be in the closed state, whereas in case of electrical charge not exceeding the predetermined threshold the control terminal may be arranged to keep the switch in the open state. As another example, the effect of applying electrical charge to the control terminal may be reversed from the first example in this regard: a charge exceeding a predetermined threshold applied to the control terminal is arranged to set the switch in the open state, while charge not exceeding the threshold is arranged to keep the switch in the closed state. In addition to charge-controlled switches, also potential/voltage-controlled and current-controlled electrically controllable switches are known. As a yet further example, the state of the switch may be arranged to depend on the relative charge or potential applied to the control terminal and to one of the first and second terminals, e.g. such that the switch is arranged to be in a closed state when charge or potential exceeding that of the control terminal is applied to the first terminal of the switch and/or when charge or potential exceeding that of the control terminal by a predetermined margin is applied to the first terminal of the switch. In addition to charge-controlled switches, also potential/voltage-controlled and current-controlled electrically controllable switches are known, operation of which may be arranged in a manner similar to that described for the charge-controlled switches in the foregoing.

In the example of Figure 2 the control means 20 is coupled to the control terminal of the switch S and the control means 20 is arranged to provide a charge, potential/voltage or current suitable to control the state of the switch S in a desired manner based at least in part on feedback from the secondary side of the power supply 10.

The switch S may be implemented for example as a suitable transistor. As a specific example, a metal oxide semiconductor field-effect transistor (MOSFET) that is designed to handle high power levels, also referred to as a power MOSFET, may be used. Such a power MOSFET may be for example an n-channel power MOSFET. A drain of the power MOSFET is coupled to a terminal of the primary winding, a source of the power MOSFET is coupled to the voltage source Vᵢₙ, and a gate of the power MOSFET acts as the control terminal of the switch, coupled to the control means 20.

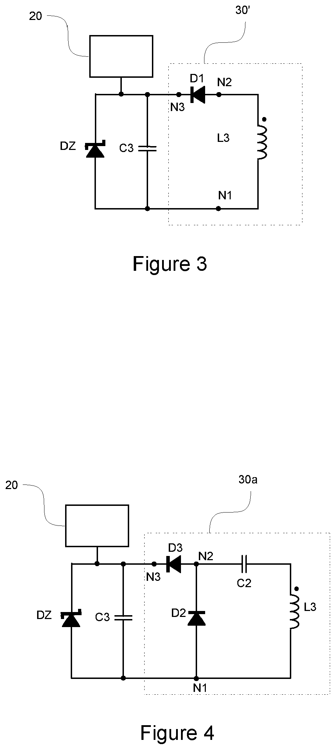

Figure 3 illustrates an example of the circuit 30' for providing an operating voltage to the control means 20. The circuit 30' comprises an auxiliary winding L3 for receiving an induced voltage, coupled between a first node N1 and a second node N2. The circuit 30' further comprises a diode D1 arranged in the current path from the second node N2 to an output node N3 in forward direction., where the output node N3 may be considered to provide the operating voltage output of the circuit 30'. In other words, an anode of the diode D1 is coupled to the second node N2 and a cathode of the diode D1 is coupled to the output node N3. The output node N3 is connectable for example to the control means 20 for providing the operating voltage.

Since there is a direct current path from the auxiliary winding L3 to the output node N3 of the circuit 30', as long as the switch S is open, the circuit 30' continuously supplies operating voltage to the output node N3, and hence to the operating voltage input of the control means 20 coupled thereto. In case of a high load applied at the output of the power supply this may result in too high voltage or current to be supplied at the output node N3 of the circuit 30', hence risking a damage or malfunction of the control means 20 and/or power loss in any further component coupled to the output node N3. On the other hand, when the switch S is closed, no operating voltage is supplied to the output node N3. Consequently, the operating voltage supplied at the output node N3 of the circuit 30' may vary in dependence of the state of the switch S and of the load applied at the output of the power converter 10.

Further variation of the operating voltage at the output node N3 may incur due to a change in the duty cycle of the power supply 10. A change in the duty cycle, which may be caused by the change in the input voltage of the power supply 10 or a change in load applied at the output of the power supply 10, implies a corresponding change in the characteristics of the voltage induced in the auxiliary winding L3. This, in turn, implies a corresponding change in the operating voltage supplied at the output node N3, especially in the time interval during which operating voltage is supplied, which may also disturb the operation of the control means 20 and/or any further component coupled to the output node N3.

Figure 3 further illustrates a capacitor C3 connected in parallel with a zener diode DZ. The capacitor C3 has a first terminal coupled to the second node N2 and a second terminal coupled to the node N1, whereas the zener diode DZ has an anode coupled to the node N1 and a cathode coupled to the second node N2. Like the control means 20, also the zener diode DZ and the capacitor C3 represent circuitry to which the circuit 30' may coupled but are not, however, considered as part of the circuit 30'. While the control means 20 may suffer damage or malfunction in case of a high load applied at the output of the power supply 10, the purpose of the zener diode DZ is to protect the control means 20 from excessive currents and voltages. When the zener diode DZ is actively protecting the control means 20, it heats up and therefore provides an example of a component that may cause power losses in case of a high load applied at the output of the power supply 10.

Figure 4 illustrates an example of the circuit 30a for providing an operating voltage to the control means 20 according to an embodiment of the invention. The circuit 30a comprises an auxiliary winding L3 for receiving an induced voltage and a capacitor C2 for storing electrical energy. The circuit 30a further comprises a first diode D2 and a second diode D3 for controlling the flow of electric current. The auxiliary winding L3 is arranged on the primary side of the transformer arrangement comprised in a power supply (not shown in Figure 4). The auxiliary winding L3 has a first terminal coupled to a node N1 and a second terminal coupled to a first terminal of the capacitor C2. A second terminal of the capacitor C2 is coupled to a node N2. In other words, the auxiliary winding L3 and the capacitor C2 are arranged in series in a first branch connecting the first node N1 to the second node N2, in other words arranged in series in a current path connecting the first node N1 and the second node N2.

The first diode D2 has an anode coupled to the first node N1 and a cathode coupled to the second node N2, the first diode D2 thereby being arranged in a second branch connecting the first node N1 to the second node N2, in other words arranged in a current path connecting the first node N1 to the second node N2. Consequently, the first branch comprising the auxiliary winding L3 and the capacitor C2 is arranged in parallel with the second branch comprising the first diode D2.

The second node N2 is further coupled to an output node N3 via the second diode D3 arranged in the current path from the second node N2 to the output node N3 in forward direction. In other words, an anode of the second diode D3 is coupled to the second node N2 and a cathode of the second diode D3 is coupled to the output node N3. The output node N3 is connectable for example to the control means 20 for providing the operating voltage.

Figure 4 further illustrates the control means 20, arranged to drive a switch S of an isolated switched mode power supply such as the flyback converter 10, as illustrated in the example of Figure 2. The output node N3 of the circuit 30a may be coupled to an operating power input of the control means 20. The node N1 of the circuit 30a may be coupled or connected to a suitable potential, for example to a ground potential.

Figure 4 further illustrates a capacitor C3 connected in parallel with a zener diode DZ. The capacitor C3 has a first terminal coupled to the output node N3 and a second terminal coupled to the node N1, whereas the zener diode DZ has an anode coupled to the node N1 and a cathode coupled to the output node N3. In an alternative arrangement, the zener diode DZ and the capacitor C3 may be arranged as part of the control means 20. Like the control means 20, also the zener diode DZ and the capacitor C3 represent circuitry to which the circuit 30 may coupled but are not, however, considered as part of the circuit 30.

In a variation of the circuit 30a the capacitor C2 may be for example replaced by a number of capacitors connected in parallel to provide a capacitance corresponding to that of the single capacitor C2 illustrated in the circuit 30a.

In a variation of the circuit 30a the first diode D2 may be for example replaced by a number of diodes arranged in parallel or by another arrangement that allows a flow of electric current only in the direction from the first node N1 to the second node N2. Alternatively or additionally, the second diode D3 may be replaced by a number of diodes arranged in parallel or by another arrangement that allows a flow of electric current only in the direction towards the output node N3.

The state of the switch S of the power supply 10 indirectly controls the operation of the circuit 30a. When the switch S is opened, the voltage induced in the auxiliary winding L3 of the circuit 30a causes an electric current to flow towards the capacitor C2 and to the output node N3 via the second diode D3, thereby also resulting in the capacitor C2 becoming charged. Once the capacitor C2 is charged at a first potential corresponding to the voltage induced across the auxiliary winding L3, the flow of electric current towards the capacitor C2 and, consequently, to the output node N3 discontinues. Consequently, the circuit 30a typically provides operating voltage at the output node N3 only a certain part of the time when the switch S is open, thereby contributing to avoid excessive operating voltage to be supplied at the output node N3. This certain part of the time depends at least in part of the characteristics of the capacitor C2.

When the switch S is closed, the voltage induced in the auxiliary winding L3 becomes reversed compared to the situation where the switch S is closed, and consequently the capacitor C2 charged at the first potential discharges via the auxiliary winding L3 and the first diode D2.

Since the voltage induced in the auxiliary winding L3 is proportional to the load applied at the output of the power supply 10, the characteristics of the capacitor C2 are preferably chosen according to the minimum load at the output of the power supply 10 in order to ensure sufficient operating voltage at the output node N3 regardless of the load. On the other hand, the chosen capacitor C2 should be able to tolerate high enough voltages in order to be capable of dealing with higher loads applied at the output of the power supply 10.

Hence, an advantage of having the capacitor C2 in the circuit 30a is that it serves as a component preventing the voltage induced in the auxiliary winding L3 and the changes thereof from directly changing the operating voltage at the output node N3 accordingly despite a change in the load applied at the output of the power supply 10 or a change in the duty cycle of the power supply 10.

In accordance with an embodiment of the invention, the polarity of the auxiliary winding L3 may be reversed from the one illustrated in Figure 4. As a consequence, the effect of the state of the switch S of the power converter 10 to the operation of the circuit 30a is reversed from the operation described hereinbefore. Hence, the switch S being closed results in the capacitor C2 becoming charged and the operating voltage being supplied at the output node N3, whereas the switch S being open results in the capacitor C2 becoming discharged, as discussed in detail hereinbefore.

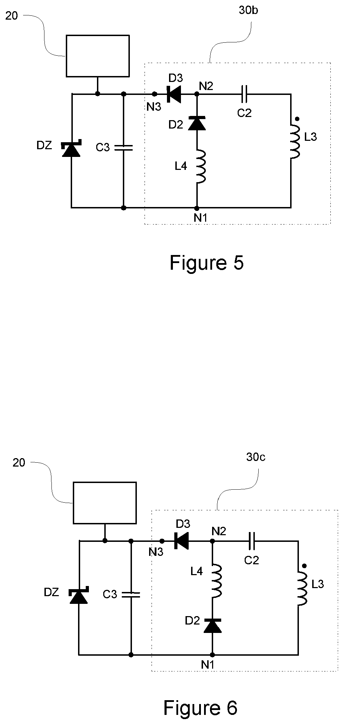

In accordance with an embodiment of the invention, the circuit 30 further comprises an inductor L4 arranged in series with the first diode D2 in the second branch connecting the first node N1 to the second node N2 such that an anode of the first diode D2 is coupled to the first node N1 and a cathode of the first diode D2 is coupled to the second node N2, as illustrated in Figures 5 and 6. The first diode D2 and the inductor L4 are thus arranged in the second branch connecting the first node N1 to the second node N2.

In a variation of such an embodiment of the invention the inductor L4 may be for example replaced by a number of inductors arranged in series

Figure 5 illustrates a circuit 30b according to an embodiment of the invention. The circuit 30b is different from the circuit 30a in that an inductor L4 is arranged in series with the first diode D2 in the second branch connecting the first node N1 to the second node N2. In accordance with this embodiment of the invention, the diode D2 and the inductor L4 are arranged such that a cathode of the diode D2 is coupled to the second node N2 and is hence also coupled to the second terminal of the capacitor C2. An anode of the diode D2 is coupled to a first terminal of the inductor L4, whereas a second terminal of the inductor L4 is coupled to the first node N1.

Figure 6 illustrates a circuit 30c according to an embodiment of the invention. The circuit 30c differs from the circuit 30b in that the order of the diode D2 and the inductor L4 arranged in series in the second branch connecting the first node N1 to the second node N2 is reversed. In the circuit 30c the first terminal of the inductor L4 is coupled to the second node N2 and is hence also coupled to the second terminal of the capacitor C2. The second terminal of the inductor L4 is coupled to the cathode of the diode D2, and the anode of the diode D2 is coupled to the first node N1.

When the switch S is opened, the voltage induced in the auxiliary winding L3 of the circuit 30b, 30c causes an electric current to flow towards the capacitor C2 and to the output node N3 via the second diode D3, thereby resulting in the capacitor C2 becoming charged. Once the capacitor C2 is charged at a first potential corresponding to the voltage induced across the auxiliary winding L3, the flow electric current towards the capacitor C2 and, consequently, to the output node N3 discontinues.

When the switch S is closed, the voltage induced in the auxiliary winding L3 becomes reversed compared to the situation where the switch S is closed, and consequently the capacitor C2 charged at the first potential discharges via the auxiliary winding L3, the first diode D2 and the inductor L4 thereby storing energy in the inductor L4. Due to the energy stored in the inductor L4 the circuit 30b, 30c continues to provide operating voltage via the second diode D3 to the output node N3 for a certain period of time after capacitor C2 has been discharged. This period of time depends on the level of the voltage induced in the auxiliary winding L3, on the characteristics of the capacitor C2 and on the characteristics of the inductor L4.

Since the voltage induced in the auxiliary winding L3 is proportional to the load applied at the output of the power supply 10, the characteristics of the capacitor C2 and the characteristics of the inductor L4 are preferable chosen according to the minimum load at the output of the power supply 10 in order to ensure sufficient operating voltage at the output node N3 regardless of the load. On the other hand, the chosen capacitor C2 and the inductor L4 should be able to tolerate high enough voltages in order to be capable of dealing with higher loads applied at the output of the power supply 10. While the capacitor C2 prevents the voltage induced in the auxiliary winding L3 or a change thereof from directly affecting the operating voltage at the output node N3, introducing also the inductor L4 through which the capacitor C2 is arranged to discharge enables a certain period of time after closing the switch S while still providing adequate level of operating voltage to the output node N3. This certain period of time depends at least in part on the voltage induced in the auxiliary winding L3 and on the characteristics of the capacitor C2, on the characteristics of the first diode D2 and on the characteristics of the inductor L4. Alternatively or additionally, embodiments comprising also the inductor L4 can be used to allow more freedom in selecting the capacitor C2 with suitable characteristics in view of the adequate level of operating voltage supplied at the output node N3.

In accordance with an embodiment of the invention, the polarity of the auxiliary winding L3 may be reversed from the one illustrated in Figures 4 and 5. As a consequence, the effect of the state of the switch S of the power converter 10 to the operation of the circuit 30b, 30c is reversed from the operation described hereinbefore. Hence, the switch S being closed results in the capacitor C2 becoming charged and the operating voltage being supplied at the output node N3, whereas the switch S being open results in the capacitor C2 becoming discharged via the inductor L4, as discussed in detail hereinbefore.

The characteristics of the components of the circuits 30a, 30b and/or 30c are selected on basis of the desired performance and usage of the respective circuit. As an example, the characteristics of the control means 20, such as an integrated circuit, and the allowed range of load voltages at the output of the power supply may be used to determine suitable values for the components of the circuit. As an example, for the capacitance of the capacitor C2 may be 4.7 nF and the inductance of the inductor L4 may be 220 µH.

In each of the circuits 30a, 30b and 30c described hereinbefore the components except the auxiliary winding L3 can be considered to be comprised in the voltage control circuit 40.

While the components C2, L3, D2, D3 and D4 of the circuits 30a, 30b and 30c are described and illustrated as being directly connected to each other, variations of the circuits 30a, 30b, and/or 30c may comprise additional components in addition to the ones described hereinbefore without departing from the scope of the present invention. For example, any two components of the circuits 30a, 30b and/or 30c may be coupled to each other via one or more intervening components, for example via one or more resistors.

## Claims

1. A circuit (30) for supplying an operating voltage to control means (20) arranged to drive an isolated switched mode power supply, the circuit comprising
- an auxiliary winding (L3) arranged on the primary side of the isolated switched mode power supply, and arranged in a first branch connecting a first node (N1) to a second node (N2),
- a capacitor (C2) arranged in series with the auxiliary winding (L3) in the first branch coupling the first node (N1) to the second node (N2), the capacitor (C2) having a first terminal coupled to a second terminal of the auxiliary winding (L3) and a second terminal coupled to the second node (N2),
- a first diode (D2) arranged in a second branch connecting the first node (N1) to the second node (N2), the first diode (D2) having an anode coupled to the first node (N1) and a cathode coupled to the second node (N2), and
- a second diode (D3) having an anode coupled to the second node (N2) and a cathode coupled to an output node (N3), the output node (N3) being connectable to the control means (20) for providing the operating voltage
**characterized in that** the circuit (30) further comprises an inductor (L4) in the second branch connecting the first node (N1) to the second node (N2), the inductor (L4) arranged in series with the first diode (D2).

2. A circuit according to claim 1, wherein
- the cathode of the first diode (D2) is coupled to the second node (N2),
- the anode of the first diode (D2) coupled to a first terminal of the inductor (L4), and
- a second terminal of the inductor (L4) is coupled to the first node (N1).

3. A circuit according to claim 1, wherein
- a first terminal of the inductor (L4) is coupled to the second node (N2),
- a second terminal of the inductor (L4) is coupled to the cathode of the first diode (D2), and
- the anode of the first diode (D2) is coupled to the first node (N1).

4. A circuit according to any preceding claim, wherein the first node (N1) is coupled to a ground potential.

5. A circuit according to any preceding claim, arranged to supply an operating voltage to the control means (20) arranged to drive a switch of a flyback converter.

6. A circuit according to any of claims 1 to 4, arranged to supply an operating voltage to the control means (20) arranged to drive a switch of a forward converter.

## Patentansprüche

1. Schaltkreis (30) zum Versorgen von Steuermitteln (20), die zum Ansteuern eines getrennten Schaltnetzteils ausgelegt sind, mit einer Betriebsspannung, wobei der Schaltkreis umfasst:
- eine Hilfswicklung (L3), die auf der Primärseite des getrennten Schaltnetzteils angeordnet ist und in einem ersten Zweig angeordnet ist, der einen ersten Knoten (N1) mit einem zweiten Knoten (N2) verbindet,
- einen Kondensator (C2), der mit der Hilfswicklung (L3) im ersten Zweig, der den ersten Knoten (N1) mit dem zweiten Knoten (N2) koppelt, in Reihe angeordnet ist, wobei der Kondensator (C2) einen ersten Anschluss, der mit einem zweiten Anschluss der Hilfswicklung (L3) gekoppelt ist, und einen zweiten Anschluss aufweist, der mit dem zweiten Knoten (N2) gekoppelt ist,
- eine erste Diode (D2), die in einem zweiten Zweig angeordnet ist, der den ersten Knoten (N1) mit dem zweiten Knoten (N2) verbindet, wobei die erste Diode (D2) eine Anode, die mit dem ersten Knoten (N1) gekoppelt ist, und eine Kathode aufweist, die mit dem zweiten Knoten (N2) gekoppelt ist, und
- eine zweite Diode (D3) mit einer Anode, die mit dem zweiten Knoten (N2) gekoppelt ist, und einer Kathode, die mit einem Ausgangsknoten (N3) gekoppelt ist, wobei der Ausgangsknoten (N3) zur Bereitstellung der Betriebsspannung mit den Steuermitteln (20) verbunden werden kann,
**dadurch gekennzeichnet, dass** der Schaltkreis (30) ferner einen Induktor (L4) im zweiten Zweig umfasst, der den ersten Knoten (N1) mit dem zweiten Knoten (N2) verbindet, wobei der Induktor (L4) mit der ersten Diode (D2) in Reihe angeordnet ist.

2. Schaltkreis nach Anspruch 1, wobei
- die Kathode der ersten Diode (D2) mit dem zweiten Knoten (N2) gekoppelt ist,
- die Anode der ersten Diode (D2) mit einem ersten Anschuss des Induktors (L4) gekoppelt ist, und
- ein zweiter Anschluss des Induktors (L4) mit dem ersten Knoten (N1) gekoppelt ist.

3. Schaltkreis nach Anspruch 1, wobei
- ein erster Anschluss des Induktors (L4) mit dem zweiten Knoten (N2) gekoppelt ist.
- ein zweiter Anschluss des Induktors (L4) mit der Kathode der ersten Diode (D2) gekoppelt ist, und
- die Anode der ersten Diode (D2) mit dem ersten Knoten (N1) gekoppelt ist.

4. Schaltkreis nach einem der vorhergehenden Ansprüche, wobei der erste Knoten (N1) mit einem Erdpotenzial gekoppelt ist.

5. Schaltkreis nach einem der vorhergehenden Ansprüche, der so ausgelegt ist, dass er Steuermittel (20), die zum Ansteuern eines Schalters eines Sperrwandlers ausgelegt sind, mit einer Betriebsspannung versorgt.

6. Schaltkreis nach einem der Ansprüche 1 bis 4, der so ausgelegt ist, dass er Steuermittel (20), die zum Ansteuern eines Schalters eines Durchflusswandlers ausgelegt sind, mit einer Betriebsspannung versorgt.

## Revendications

1. Circuit (30) pour fournir une tension de fonctionnement à un moyen de commande (20) agencé pour commander une alimentation électrique à mode commuté isolée, le circuit comprenant
- un enroulement auxiliaire (L3) agencé sur le côté primaire de l'alimentation électrique à mode commuté isolée, et agencé dans une première branche connectant un premier noeud (N1) à un second noeud (N2),
- un condensateur (C2) agencé en série avec l'enroulement auxiliaire (L3) dans la première branche couplant le premier noeud (N1) au second noeud (N2), le condensateur (C2) comportant une première borne couplée à une seconde borne de l'enroulement auxiliaire (L3) et une seconde borne couplée au second noeud (N2),
- une première diode (D2) agencée dans une seconde branche connectant le premier noeud (N1) au second noeud (N2), la première diode (D2) comportant une anode couplée au premier noeud (N1) et une cathode couplée au second noeud (N2), et
- une seconde diode (D3) comportant une anode couplée au second noeud (N2) et une cathode couplée à un noeud de sortie (N3), le noeud de sortie (N3) pouvant être connecté au moyen de commande (20) pour fournir la tension de fonctionnement
**caractérisé en ce que** le circuit comprend en outre une bobine d'induction (L4) dans la seconde branche connectant le premier noeud (N1) au second noeud (N2), la bobine d'induction (L4) étant agencée en série avec la première diode (D2).

2. Circuit selon la revendication 1, dans lequel
- la cathode de la première diode (D2) est couplée au second noeud (N2),
- l'anode de la première diode (2) est couplée à une première borne de la bobine d'induction (L4), et
- une seconde borne de la bobine d'induction (L4) est couplée au premier noeud (N1).

3. Circuit selon la revendication 1, dans lequel
- une première borne de la bobine d'induction (L4) est couplée au second noeud (N2),
- une seconde borne de la bobine d'induction (L4) est couplée à la cathode de la première diode (D2), et
- l'anode de la première diode (D2) est couplée au premier noeud (N1).

4. Circuit selon l'une quelconque des revendications précédentes, dans lequel le premier noeud (N1) est couplé à un potentiel de masse.

5. Circuit selon l'une quelconque des revendications précédentes, agencé pour fournir une tension de fonctionnement au moyen de commande (20) agencé pour commander un commutateur d'un convertisseur à transfert indirect.

6. Circuit selon l'une quelconque des revendications 1 à 4, agencé pour fournir une tension de fonctionnement au moyen de commande (20) agencé pour commander un commutateur d'un convertisseur à transfert direct.
